# EUROPÄISCHE PATENTSCHRIFT

(11) **EP 3 024 077 B1**
(45) Veröffentlichungstag und Bekanntmachung des Hinweises auf die Patenterteilung: **08.11.2017**
(21) Anmeldenummer: 15185303.3
(22) Anmeldetag: 15.09.2015
(51) Int. Cl.: H01M 8/04082, H01M 8/0438, H01M 8/04664, H01M 8/04746, H01M 8/04089, H01M 8/124

(54) **EINRICHTUNG UND VERFAHREN ZUR VERSORGUNG EINER BRENNSTOFFZELLENBATTERIE**
DEVICE AND METHOD FOR SUPPLYING A FUEL CELL BATTERY
DISPOSITIF ET PROCEDE D'ALIMENTATION D'UNE BATTERIE A PILES A COMBUSTIBLES

(30) Priorität: 18.11.2014 EP 14193713
(43) Veröffentlichungstag der Anmeldung: 25.05.2016
(73) Patentinhaber: Hexis AG, 8404 Winterthur (CH)
(72) Erfinder: Denzler, Roland, 8484 Weisslingen (CH); Kober, Ralf, 8409 Winterthur (CH); Gamper, Thomas, 8253 Diessenhofen (CH)
(74) Vertreter: Intellectual Property Services GmbH

(56) Entgegenhaltungen:
- EP-A1- 1 205 993
- DE-A1-102012 018 102
- DE-A1-102012 104 146
- JP-A- 2007 149 496

## Beschreibung

Die Erfindung betrifft eine Einrichtung zur Versorgung einer Brennstoffzellenbatterie gemäss dem Oberbegriff des Anspruchs 1 und ein Verfahren zur Versorgung einer Brennstoffzellenbatterie gemäss dem Oberbegriff des Anspruchs 8.

Brennstoffzellen und damit auch Brennstoffzellenbatterien sind Elemente von Brennstoffzellensystemen und ermöglichen eine Nutzung von Energie eines Brennstoffs durch Energieumwandlung. Dabei können sowohl elektrische Energie, die aufgrund elektrochemischer Prozesse erzeugt wird, als auch thermische Energie, die in Form von heissen Abgasen der Prozesse anfällt, genutzt werden. Es werden dazu gasförmige Ströme zweier Edukte getrennt durch die Zellen geführt. Das erste Edukt, das insbesondere Umgebungsluft ist, enthält oxidierende Komponenten, das zweite Edukt reduzierende Komponenten. Als zweites Edukt wird insbesondere ein Methan enthaltendes Gas (z. B. Erdgas) verwendet, das vor dem Eintritt in die Zellen durch einen Reformer geführt und dort in die reduzierenden Komponenten Wasserstoff und Kohlenmonoxid umgewandelt wird.

Die Edukte werden in einem Mengenverhältnis in die Brennstoffzellenbatterie eingespeist, das mit der so genannten, auf die Stöchiometrie bezogenen Luftzahl (oder Luftverhältnis) λ charakterisiert wird. Damit im Abgasstrom keine reduzierenden Komponenten, also keine unverbrannten Komponenten des zweiten Edukts, mehr enthalten sind, muss gewährleistet sein, dass die Luftzahl λ immer grösser oder gleich 1 ist. Damit ist sichergestellt, dass immer genügend Sauerstoff zur vollständigen Oxidation des Wasserstoffs und des Kohlenmonoxids vorhanden und so ein sicherer Betrieb der Brennstoffzellenbatterie gewährleistet ist.

Es muss insbesondere sichergestellt werden, dass bei einem ungenügenden ersten Eduktstrom, also insbesondere einem ungenügenden Umgebungsluftstrom nicht weiterhin das zweite Edukt also insbesondere Erdgas der Brennstoffzellenbatterie zugeführt wird. Würde auch in diesem Fall weiterhin Erdgas zugeführt werden, könnte dies dazu führen, dass unverbrannter Wasserstoff und unverbranntes Kohlenmonoxid die Brennstoffzellenbatterie verlässt und ausserhalb der Brennstoffzellenbatterie unkontrolliert verbrennt. Einrichtungen zur Steuerung des Flusses in einer Brenngasleitung sind aus EP 1 205 993 A1 und aus JP 2007 149 496 bekannt. Aus DE 10 2012 018 102 A1 sind eine Einrichtung und ein Verfahren zur Luftversorgung einer Brennstoffzelle bekannt. Es ist bekannt, dass der erste Eduktstrom mittels eines Überwachungselements überwacht wird, das in Abhängigkeit einer Kenngrösse des ersten Eduktstroms ein Fehlersignal erzeugen kann, welches einen ungenügenden ersten Eduktstrom anzeigt. Das Überwachungselement kann beispielsweise als ein Druckschalter ausgeführt sein, der parallel zu einem Druckabfallerzeugungselement, beispielsweise in Form einer Blende angeordnet ist. Der Druckschalter erzeugt ein Fehlersignal, wenn ein Druckabfall am Druckabfallerzeugungselementkleiner als ein Schwellwert ist. Dies ist dann der Fall, wenn der Durchfluss des ersten Edukts durch das Druckabfallerzeugungselementzu gering ist. Dieses Fehlersignal wird von einem Feuerungsautomat empfangen, der als Reaktion darauf ein Absperrelement ansteuert, das den zweiten Eduktstrom, also insbesondere einen Erdgasstrom unterbricht.

Damit die beschriebene Unterbrechung bei Vorliegen eines ungenügenden ersten Eduktstroms sicher funktioniert, muss natürlich auch das Überwachungselement fehlerfrei funktionieren, also immer wenn notwendig das Fehlersignal erzeugen. Es ist zumindest in einigen Ländern gesetzlich vorgeschrieben, dass die Funktionstüchtigkeit des Überwachungselements regelmässig, beispielsweise mindestens einmal innerhalb von 24 Stunden, überprüft wird. Bei bekannten Systemen wird dazu die Versorgung der Brennstoffzellenbatterie in regelmässigen Abständen, beispielsweise alle 24 Stunden bewusst unterbrochen und damit die Brennstoffzellenbatterie herunter gefahren. Sobald die Versorgung der Brennstoffzellenbatterie mit den beiden Edukten unterbrochen ist, erzeugt ein funktionstüchtiges Überwachungselement das genannte Fehlersignal. Ist dies der Fall, kann die Brennstoffzellenbatterie wieder hochgefahren werden. Wird kein Fehlersignal erzeugt, so liegt ein Defekt am Überwachungselement vor und die Brennstoffzellenbatterie darf ohne vorherige weitere Prüfung nicht wieder hochgefahren werden.

Das Herunter- und anschliessende Hochfahren einer Brennstoffzellenbatterie unterbricht die elektrische Stromerzeugung des Brennstoffzellensystems, benötigt Energie und hat ausserdem negative Auswirkungen auf die Lebensdauer der Brennstoffzellenbatterie.

Demgegenüber ist es die insbesondere Aufgabe der Erfindung, eine Vorrichtung und ein Verfahren zur Versorgung einer Brennstoffzellenbatterie vorzuschlagen, welche einen hohen Wirkungsgrad und/oder einen schonenden Betrieb der Brennstoffzellenbatterie ermöglichen. Erfindungsgemäß wird diese Aufgabe mit einer Einrichtung mit den Merkmalen des Anspruchs 1 und einem Verfahren mit den Merkmalen des Anspruchs 8 gelöst.

Erfindungsgemäss verfügt die Einrichtung zur Versorgung einer Brennstoffzellenbatterie über eine erste Zuführleitung zur Zuführung eines ersten gasförmigen Edukts in einem ersten Eduktstrom und eine zweite Zuführleitung zur Zuführung eines zweiten gasförmigen Edukts in einem zweiten Eduktstrom. Ein Überwachungselement der Einrichtung ist so ausgeführt, dass es in Abhängigkeit einer Kenngrösse des ersten Eduktstroms ein Fehlersignal erzeugen kann, welches einen ungenügenden ersten Eduktstrom anzeigt. Ein Feuerungsautomat kann das Überwachungssignal empfangen und ein in der zweiten Zuführleitung angeordnetes Absperrelement so ansteuern, dass es den zweiten Eduktstrom unterbricht.

Die Einrichtung weist ausserdem eine Überbrückungseinrichtung auf, welche einen aktiven und einen inaktiven Zustand einnehmen kann und so ausgeführt und angeordnet ist, dass im inaktiven Zustand der Überbrückungseinrichtung das Überwachungselement das Fehlersignal in Abhängigkeit einer Kenngrösse des ersten Eduktstroms erzeugen kann und im aktiven Zustand der Überbrückungseinrichtung ein funktionstüchtiges Überwachungselement das Fehlersignal sicher erzeugt. Die Überbrückungseinrichtung ist also so ausgeführt, dass sie unabhängig vom tatsächlich vorliegenden ersten Eduktstrom ein Fehlersignal des Überwachungselements provozieren kann. Damit kann auch bei weiterhin aufrecht erhaltenem erstem Eduktstrom und somit bei laufendem Betrieb der Brennstoffzellenbatterie das Überwachungselement auf seine Funktionstüchtigkeit geprüft werden. Die erfindungsgemässe Einrichtung erlaubt damit einen Dauerbetrieb der Brennstoffzellenbatterie, bei dem dennoch die Funktionstüchtigkeit des Überwachungselements geprüft und damit sichergestellt werden kann. Der so mögliche Dauerbetrieb erfüllt auch die oben genannten gesetzlichen Vorgaben. Die erfindungsgemässe Einrichtung macht damit ein Herunterfahren und das anschliessende Hochfahren der Brennstoffzellenbatterie zur Überprüfung des Überwachungselements überflüssig. Damit muss dafür keine Energie aufgewandt werden, was einen sehr hohen Wirkungsgrad der Brennstoffzellenbatterie ermöglicht. Auch kann kontinuierlich elektrischer Strom durch das Brennstoffzellensystem erzeugt werden. Ausserdem wird die Brennstoffzellenbatterie nicht durch ein regelmässiges Herunter- und Hochfahren belastet, was einen schonenden Betrieb der Brennstoffzellenbatterie ermöglicht.

Die genannte Kenngrösse des ersten Eduktstroms, in deren Abhängigkeit das Überwachungselement das Fehlersignal erzeugen kann, kann beispielsweise als eine Durchflussmenge, ein Druck oder ein Druckabfall an einem pneumatischen Element, insbesondere an einem Druckabfallerzeugungselement, wie beispielsweise einer Düse oder einer Blende ausgeführt sein. Die Kenngrösse kann direkt gemessen werden oder wie beispielsweise eine Durchflussmenge aus anderen gemessenen Grössen, wie beispielsweise einem Druckabfall abgeleitet werden. Das Überwachungselement ist dann so ausgeführt, dass es die genannte Kenngrösse auswertet und bei Vorliegen bestimmter Bedingungen, wie beispielsweise einem Unter- oder Überschreiten von Grenz- oder Schwellwerten, einen ungenügenden ersten Eduktstrom erkennt und als Folge davon ein Fehlersignal erzeugt.

Das erste Edukt ist insbesondere Umgebungsluft und das zweite Edukt ist insbesondere ein Methan enthaltendes Gas, wie beispielsweise Erdgas. Das Erdgas wird vor dem Eintritt in die Zellen durch einen Reformer geführt und dort unter anderem in die reduzierenden Komponenten Wasserstoff und Kohlenmonoxid umgewandelt. Bei der nachfolgenden Beschreibung wird kein Unterschied zwischen den Strömen eines ursprünglichen Edukts und eines umgewandelten Edukts gemacht. Die Reformierungsprozesse werden in der Regel nicht mehr explizit genannt; sondern es wird stillschweigend vorausgesetzt, dass auch der Einsatz von Reformern vorgesehen ist.

Die Brennstoffzellen sind insbesondere als Hochtemperatur-Brennstoffzellen des SOFC-Typs ("Solid Oxid Fuel Cell") ausgeführt.

In Ausgestaltung der Erfindung ist in der ersten Zuführleitung ein erstes pneumatisches Element angeordnet. Ein erster Eingang des Überwachungselements ist mit der ersten Zuführleitung unmittelbar vor dem ersten pneumatischen Element und ein zweiter Eingang des Überwachungselements mit der ersten Zuführleitung innerhalb oder unmittelbar hinter dem ersten pneumatischen Element verbindbar. Die Überbrückungseinrichtung ist so ausgeführt und angeordnet, dass sie im aktiven Zustand den ersten und zweiten Eingang des Überwachungselements verbindet und im inaktiven Zustand der erste Eingang des Überwachungselements mit der ersten Zuführleitung unmittelbar vor dem ersten pneumatischen Element und der zweite Eingang des Überwachungselements mit der ersten Zuführleitung innerhalb oder unmittelbar hinter dem ersten pneumatischen Element verbunden ist und ausserdem der erste und zweite Eingang des Überwachungselements voneinander getrennt sind. Die Verbindung zwischen dem zweiten Eingang des Überwachungselements mit der ersten Zuführleitung ist dabei so ausgeführt, dass aus dem erfassten Druckunterschied zwischen dem ersten und zweiten Eingang des Überwachungselements zuverlässig auf den Durchfluss durch das erste pneumatische Element geschlossen werden kann.

Wo genau die Verbindung zwischen dem zweiten Eingang des Überwachungselements und der ersten Zuführleitung endet, hängt von der Bauart des ersten pneumatischen Elements ab.

Damit ist im aktiven Zustand das Überwachungselement quasi kurzgeschlossen. Bei einem derartigen Kurzschluss muss ein funktionstüchtiges Überwachungselement sofort ein Fehlersignal erzeugen. Ist dies nicht der Fall, liegt ein Fehler am Überwachungselement vor, der vom Feuerungsautomaten erkannt wird. Im inaktiven Zustand der Überbrückungseinrichtung kann das Überwachungselement den ersten Eduktstrom wie gewohnt überwachen.

Dieser Aufbau ermöglicht eine einfache und damit kostengünstige Umsetzung der Überbrückungseinrichtung und damit eine kostengünstige Vorrichtung zur Versorgung einer Brennstoffzellenbatterie.

In Ausgestaltung der Erfindung weist die Überbrückungseinrichtung ein 2/3-Wegeventil auf, welches vom Feuerungsautomat ansteuerbar ist. Ein 2/3-Wegeventil besitzt 2 Stellungen und 3 Anschlüsse. Durch einen Wechsel der Stellungen des 2/3-Wegeventils kann ein Wechsel zwischen dem aktiven und dem inaktiven Zustand der Überbrückungseinrichtung erreicht werden. Die drei Anschlüsse des 2/3-Wegeventils sind mit dem ersten Eingang des Überwachungselements, dem zweiten Eingang des Überwachungselements und der ersten Zuführleitung verbunden.

Derartige 2/3-Wegeventile sind in einer grossen Auswahl und zu günstigen Preisen erhältlich. Ausserdem sind derartige 2/3-Wegeventile erprobt und robust. Damit ist die Überbrückungseinrichtung besonders kostengünstig und betriebssicher umsetzbar.

Das 2/3-Wegeventil ist insbesondere so ausgeführt und angeordnet, dass es im aktiven Zustand der Überbrückungseinrichtung den ersten und zweiten Eingang des Überwachungselements verbindet und eine Verbindungsleitung zur ersten Zuführleitung innerhalb oder unmittelbar hinter dem ersten pneumatischen Element absperrt und im inaktiven Zustand der Überbrückungseinrichtung den zweiten Eingang des Überwachungselements mit der ersten Zuführleitung innerhalb oder unmittelbar hinter dem ersten pneumatischen Element verbindet und eine Verbindungsleitung zum ersten Eingang des Überwachungselements absperrt.

In Ausgestaltung der Erfindung ist das erste pneumatisches Element: als ein Druckabfallerzeugungselementinsbesondere als eine Düse, eine Drossel, ein so genanntes Laminarflowelement oder eine Blende und im Speziellen als eine Venturi-Düse ausgeführt. Wenn das erste pneumatische Element als eine Düse und insbesondere als eine Venturi-Düse ausgeführt ist, so ist der zweite Eingang des Überwachungselements insbesondere mit der ersten Zuführleitung innerhalb der Venturi-Düse verbunden. Die genannte Verbindung endet insbesondere an der engsten Stelle, dem so genannten Düsenhals der Venturi-Düse. Die Venturi-Düse kann auch einen den Düsenhals umgebenden Ringspalt aufweisen, in dem die genannte Verbindung enden kann. Wenn das erste pneumatische Element als eine Blende ausgeführt ist, dann ist der zweite Eingang des Überwachungselements mit der ersten Zuführleitung unmittelbar nach der Blende verbunden.

Das Überwachungselement ist insbesondere so ausgeführt, dass es eine Druckdifferenz vor und hinter dem Druckabfallerzeugungselementauswertet.

Damit kann auf einfache Weise aus einem Druckabfall am ersten pneumatischen Element auf die Durchflussmenge des ersten Eduktstroms durch das erste pneumatische Element geschlossen werden bzw. der Druckabfall als Mass für die Durchflussmenge genutzt werden. Dies ermöglicht eine einfache und kostengünstige Überwachung des ersten Eduktstroms.

In Ausgestaltung der Erfindung ist das Überwachungselement als ein Druckschalter ausgeführt ist, der bei einer Druckdifferenz unterhalb eines Schwellwerts das Fehlersignal erzeugt. Dies ermöglicht einerseits eine einfache und sichere Erkennung eines ungenügenden Eduktstroms.

Ausserdem sind derartige Druckschalter in einer grossen Auswahl und zu günstigen Preisen erhältlich und sie sind erprobt und robust. Damit ist die Überbrückungseinrichtung besonders kostengünstig und betriebssicher umsetzbar.

Das Überwachungselement kann auch als ein Drucksensor ausgeführt sein, mittels welchem eine kontinuierliche Druckmessung durchgeführt werden kann. In diesem Fall kann im aktiven Zustand der Überwachungseinrichtung ein Nullpunkt des Drucksensors überprüft und korrigiert werden. Es kann damit eine so genannte Nullpunktkorrektur oder eine so genannte Kalibrierung des Drucksensors erfolgen.

Die oben genannte Aufgabe wird auch durch ein Verfahren zur Versorgung einer Brennstoffzellenbatterie gelöst, bei welchem ein erstes gasförmiges Edukt in einem ersten Eduktstrom über eine erste Zuführleitung und ein zweites gasförmiges Edukt in einem zweiten Eduktstrom über eine zweite Zuführleitung zugeführt wird. Mittels eines Überwachungselements kann in Abhängigkeit einer Kenngrösse des ersten Eduktstroms ein Fehlersignal erzeugt werden, welches einen ungenügenden ersten Eduktstrom anzeigt und von einem Feuerungsautomat empfangen werden kann. Der zweite Eduktstrom kann von einem in der zweiten Zuführleitung angeordneten und vom Feuerungsautomat ansteuerbaren Absperrelement unterbrochen werden. Es ist eine Überbrückungseinrichtung vorgesehen, die vom Feuerungsautomat in einen inaktiven Zustand, in dem das Überwachungselement das Fehlersignal in Abhängigkeit einer Kenngrösse des ersten Eduktstroms erzeugen kann und in einen aktiven Zustand, in dem ein funktionstüchtiges Überwachungselement das Fehlersignal sicher erzeugt, gebracht werden kann.

In Ausgestaltung der Erfindung schliesst der Feuerungsautomat bei inaktivem Zustand der Überbrückungseinrichtung und Vorliegen des Fehlersignals das Absperrelement und hält es bei aktivem Zustand der Überbrückungseinrichtung und Vorliegen des Fehlersignals geöffnet.

In Ausgestaltung der Erfindung erkennt der Feuerungsautomat bei aktivem Zustand der Überbrückungseinrichtung und Vorliegen des Fehlersignals eine Funktionstüchtigkeit des Überwachungselements und bei aktivem Zustand der Überbrückungseinrichtung und keinem Vorliegen des Fehlersignals ein Fehlverhalten des Überwachungselements.

Da die Überprüfung des Überwachungselements nur sehr kurze Zeit, insbesondere nur wenige Sekunden, in Anspruch nimmt, kann der Betrieb der Brennstoffzellenbatterie während der Überprüfung unbeeinflusst fortgeführt werden.

In Ausgestaltung der Erfindung bringt der Feuerungsautomat die Überbrückungseinrichtung ausgehend vom inaktiven Zustand in zeitlichen Abständen von beispielsweise 24 Stunden in den aktiven Zustand und anschliessend wieder zurück in den inaktiven Zustand. Damit kann eine regelmässige Überprüfung des Überwachungselements gewährleistet und ausserdem gesetzliche Vorgaben eingehalten werden.

In Ausgestaltung der Erfindung bringt der Feuerungsautomat die Überbrückungseinrichtung ausgehend vom aktiven Zustand direkt nach Empfang eines Fehlersignals vom Überwachungselement zurück in den inaktiven Zustand. Damit kann erreicht werden, dass eine Überprüfung des ersten Eduktstroms nur für eine sehr kurze Zeit unterbrochen ist.

Weitere Vorteile, Merkmale und Einzelheiten der Erfindung ergeben sich anhand der nachfolgenden Beschreibung von Ausführungsbeispielen sowie anhand der Zeichnungen, in welchen gleiche oder funktionsgleiche Elemente mit identischen Bezugszeichen versehen sind.

Dabei zeigen:
- Fig. 1: eine schematische Darstellung eines Brennstofifzellensystems mit einer Brennstoffzellenbatterie und einer Einrichtung zu deren Versorgung und
- Fig. 2: ein 2/3-Wegeventil einer Überbrückungseinrichtung der Einrichtung zur Versorgung einer Brennstofifzellenbatterie aus Fig. 1.

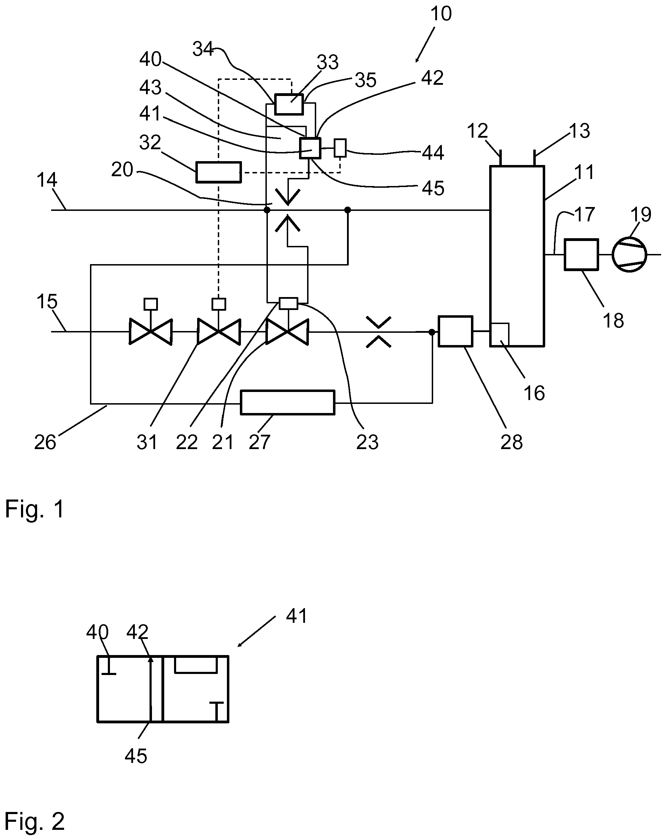

Gemäss Fig. 1 weist ein Brennstoffzellensystem 10 eine Brennstoffzellenbatterie 11 mit einer Reihe von nicht einzeln dargestellten Brennstoffzellen auf. In der Brennstoffzellenbatterie 11 erzeugte elektrische Energie kann über Pole 12, 13 abgeführt werden. Ein erstes gasförmiges Edukt in Form von Umgebungsluft wird über eine erste Zuführleitung 14 in einem ersten Eduktstrom der Brennstoffzellenbatterie 11 zugeführt. Ein zweites gasförmiges Edukt in Form von Erdgas wird der Brennstoffzellenbatterie 11 über eine zweite Zuführleitung 15 in einem zweiten Eduktstrom zugeführt. Das Erdgas wird zuerst von einem Reformer 16 in eine reaktionsfähige Form umgewandelt. Eine mit der elektrischen Energie gleichzeitig entstehende Abwärme wird in Form eines heissen Abgases als Abgasstrom aus der Brennstoffzellenbatterie 11 über eine Abgasleitung 17 einem Wärmetauscher 18 zugeführt, in dem dem Abgas die Wärmeenergie entzogen wird. Das so abgekühlte Abgas wird über ein Gebläse 19 angesaugt und an die Umgebung abgegeben.

In der ersten Zuführleitung 14 ist ein erstes pneumatisches Element in Form einer Venturi-Düse 20, also ein Druckabfallerzeugungselement, angeordnet. Über den Druckabfall an der Venturi-Düse 20 kann auf die Durchflussmenge des Umgebungsluftstroms und damit auf eine Kenngrösse des ersten Eduktstroms geschlossen werden, bzw. der Druckabfall ist ein Mass für die Durchflussmenge des Umgebungsluftstroms.

Zu einem gegebenen Umgebungsluftstrom muss ein passender Erdgasstrom, also ein zweiter Eduktstrom eingestellt werden. Der Erdgasstrom muss so eingestellt werden, dass die Luftzahl λ immer grösser als 1, aber trotzdem möglichst klein ist. Dazu ist in der zweiten Zuführleitung 15 ein zweites pneumatisches Element in Form eines Verhältnisdruckreglers 21, also ein Druckeinstellventil angeordnet. Ein erster Regel-Eingang 22 des Verhältnisdruckreglers 21 ist mit der ersten Zuführleitung 14 unmittelbar vor der Venturi-Düse 20 und ein zweiter Regel-Eingang 23 des Verhältnisdruckreglers 21 mit der ersten Zuführleitung 14 am engsten Querschnitt der der Venturi-Düse 20 verbunden. Damit wird am Ausgang des Verhältnisdruckreglers 21 ein Druck eingeregelt, der in einem festgelegten Verhältnis zum Druckabfall an der Venturi-Düse 20 steht und damit von der Durchflussmenge des Umgebungsluftstroms abhängig ist. Das genannte Verhältnis beträgt beispielsweise 11:1. Damit kann ein gewünschtes Verhältnis von Umgebungsluftstrom zu Erdgasstrom und so eine gewünschte die Luftzahl λ eigestellt werden.

In Strömungsrichtung hinter dem Verhältnisdruckregler 21 mündet eine Versorgungsleitung 26 in die zweite Zuführleitung 15, die von der ersten Zuführleitung 14 hinter der Venturi-Düse 20 abzweigt. In der Versorgungsleitung 26 sind weitere, für die vorliegende Erfindung nicht relevante Bauteile angeordnet, die hier als nur ein Bauteil 27 dargestellt sind. Über die Versorgungsleitung 26 wird Umgebungsluft zugeführt, die im Reformer 16 zur Umwandlung des Erdgases benötigt wird. In einem in Strömungsrichtung nach dem Einleiten der Umgebungsluft in die zweite Zuführleitung 15 angeordnetes Mischelements 28 wird das Erdgas und die Umgebungsluft vor der Einleitung in den Reformer 16 gemischt.

In Strömungsrichtung vor dem Verhältnisdruckregler 21 ist in der zweiten Zuführleitung 15 ein Absperrelement in Form eines Absperrventils 31 angeordnet. Mittels des Absperrventils 31 kann die zweite Zuführleitung 15 abgesperrt und damit der Erdgasstrom unterbrochen werden. Damit kann eine schnelle und sichere Abschaltung der Brennstoffzellenbatterie 11 erreicht werden. Das Absperrventil 31 wird von einem Feuerungsautomaten 32 angesteuert, der mit einem Überwachungselement in Form eines Druckschalters 33 signalverbunden ist. Der Feuerungsautomat 32 ist ausserdem mit einer Vielzahl der beschriebenen Komponenten signalverbunden, wobei diese Verbindungen aus Übersichtlichkeitsgründen nicht dargestellt sind. Statt eines Druckschalters kann auch ein Drucksensor zur kontinuierlichen Druckmessung verwendet werden.

Ein erster Eingang 34 des Druckschalters 33 ist sowohl mit der ersten Zuführleitung 14 unmittelbar vor der Venturi-Düse 20, als auch mit einem ersten Anschluss 40 eines 2/3-Wegeventil 41 verbunden. Das 2/3-Wegeventil 41 ist in Fig. 2 detaillierter dargestellt. Ein zweiter Eingang 35 des Druckschalters 33 ist mit einem zweiten Anschluss 42 des 2/3-Wegeventils 41 verbunden. Das 2/3-Wegeventil 41 ist Teil einer Überbrückungseinrichtung 43 und kann von einer Stelleinrichtung 44 in zwei verschiedene Stellungen gebracht werden, wobei einer Stellung einem aktiven und die andere Stellung einem inaktiven Zustand der Überbrückungseinrichtung 43 entspricht. Die Stelleinrichtung 44 wird vom Feuerungsautomat 32 angesteuert und stellt die genannten Stellungen des 2/3-Wegeventils 41 nach dessen Vorgaben ein. Ein dritter Anschluss 45 des 2/3-Wegeventils 41 ist mit der ersten Zuführleitung 14 am engsten Querschnitt der der Venturi-Düse 20 verbunden. Die Stelleinrichtung 43 setzt sich aus dem 2/3-Wegeventil 41, der Stelleinrichtung 44 und der Verbindung zum ersten Eingang 34 des Druckschalters 33 zusammen.

An Hand von Fig. 2 wird der Aufbau des 2/3-Wegeventils 41 genauer beschrieben. Das 2/3-Wegeventil 41 kann zwei Stellungen einnehmen, die in Fig. 2 nebeneinander dargestellt sind.

Die erste, auf der linken Seite dargestellte Stellung entspricht dem inaktiven Zustand der der Überbrückungseinrichtung 43. In dieser Stellung ist der erste Anschluss 40 und damit die Verbindung zum ersten Eingang 34 des Druckschalters 33 abgesperrt. Der zweite Anschluss 42 und der dritte Anschluss 45 sind verbunden, so dass der zweite Eingang 35 des Druckschalters 33 mit der der ersten Zuführleitung 14 am engsten Querschnitt Venturi-Düse 20 verbunden ist. Damit ist in dieser Stellung der Druckschalter 33 ist parallel zur Venturi-Düse 20 angeordnet.

Die zweite, auf der rechten Seite dargestellte Stellung entspricht dem aktiven Zustand der der Überbrückungseinrichtung 43. In dieser Stellung sind der erste Anschluss 40 und der zweite Anschluss 42 verbunden. Damit sind der erste Eingang 34 und der zweite Eingang 35 des Druckschalters 33 verbunden, so dass an beiden Eingängen 34 und 35 der selbe Druck anliegt. Der dritte Anschluss 45 ist abgesperrt, so dass keine Verbindung zur ersten Zuführleitung 14 besteht.

Der Druckschalter 33 ist so ausgeführt, dass er ein Fehlersignal erzeugt, wenn ein Druckunterschied der Drücke am zweiten Eingang 35 und am ersten Eingang 34 kleiner als ein Schwellwert ist. Im inaktiven Zustand der Überbrückungseinrichtung 43 ist der Druckschalter 33 parallel zur Venturi-Düse 20 angeordnet. Solange der Umgebungsluftstrom ausreichend und damit der Druckabfall an der Venturi-Düse 20 grösser als der Schwellwert ist, erzeugt der Druckschalter 33 kein Fehlersignal. Ist der Umgebungsluftstrom aber ungenügend gross, fällt also der Druckabfall unter den Schwellwert, so erzeugt der Druckschalter 33 ein Fehlersignal, das vom Feuerungsautomaten 32 empfangen wird. Da der Feuerungsautomat 32 die Stelleinrichtung 44 des 2/3-Wegeventil 41 ansteuert, kennt er die Stellung des 2/3-Wegeventil 41 und weiss damit, ob die Überbrückungseinrichtung 43 im aktiven oder inaktiven Zustand ist. Wird ein Fehlersignal empfangen und die Überbrückungseinrichtung 43 ist im inaktiven Zustand, so liegt ein ungenügender Umgebungsluftstrom vor und der Feuerungsautomat 32 unterbricht durch Schliessen des Sperrventils 31 den Erdgasstrom.

Zur Prüfung der Funktion des Druckschalters 33 steuert der Feuerungsautomat 32 die Stelleinrichtung 44 des 2/3-Wegeventil 41 so an, dass der aktive Zustand der Überbrückungseinrichtung 43 eingestellt wird. Also Folge davon werden der erste und zweite Eingang 34, 35 des Druckschalters 33 miteinander verbunden. Damit liegt an beiden Eingängen 34, 35 der selbe Druck an und die Druckdifferenz zwischen den beiden Eingängen 34, 35 ist Null. Ein funktionstüchtiger Druckschalter 33 muss als Reaktion darauf zumindest nach einer kurzen Reaktionszeit ein Fehlersignal sicher erzeugen, das einen ungenügenden Umgebungsluftstrom anzeigen würde. Da der Feuerungsautomat 32 weiss, dass die Überbrückungseinrichtung 43 im aktiven Zustand ist, führt das Fehlersignal aber nicht zur Unterbrechung des Erdgasstroms, das Sperrventil 31 bleibt also geöffnet. Das Fehlersignal wird vielmehr als Zeichen der Funktionstüchtigkeit des Druckschalters 33 interpretiert. Würde der Druckschalter 33 in diesem Fall kein Fehlersignal erzeugen, würde daraus auf ein Fehlverhalten des Druckschalters 33 geschlossen werden und als Folge davon der Erdgasstrom durch Schliessen des Sperrventils 31 unterbrochen. Sobald der Feuerungsautomat 32 das Fehlersignal empfängt, stellt er die Überbrückungseinrichtung 43 wieder in den inaktiven Zustand.

Falls statt eines Druckschalters ein Drucksensor verwendet wird, kann im aktiven Zustand der Überbrückungseinrichtung 43 eine Nullpunktkorrektur für den Drucksensor durchgeführt werden.

Da die Überprüfung des Druckschalters 33 nur sehr kurze Zeit, insbesondere nur wenige Sekunden, in Anspruch nimmt, kann der Betrieb der Brennstoffzellenbatterie 11 während der Überprüfung unbeeinflusst fortgeführt werden.

Die beschriebene Überprüfung des Druckschalters 33 durch das Bringen der Überbrückungseinrichtung 43 ausgehend vom inaktiven Zustand in den aktiven Zustand und anschiessend wieder zurück in den inaktiven Zustand wird vom Feuerungsautomaten 32 in regelmässigen Abständen, insbesondere alle 24 Stunden durchgeführt.

## Patentansprüche

1. Einrichtung zur Versorgung einer Brennstoffzellenbatterie (11) mit
- einer ersten Zuführleitung (14) zur Zuführung eines ersten gasförmigen Edukts in einem ersten Eduktstrom,
- einer zweiten Zuführleitung (15) zur Zuführung eines zweiten gasförmigen Edukts in einem zweiten Eduktstrom,
- einem Überwachungselement (33), welches so ausgeführt ist, dass es in Abhängigkeit einer Kenngrösse des ersten Eduktstroms ein Fehlersignal erzeugen kann, welches einen ungenügenden ersten Eduktstrom anzeigt,
- einem Feuerungsautomat (32), welcher das Überwachungssignal empfangen kann,
- ein in der zweiten Zuführleitung (15) angeordnetes Absperrelement (31), welches vom Feuerungsautomat (32) ansteuerbar ist und dazu vorgesehen ist, den zweiten Eduktstrom zu unterbrechen und
- einer Überbrückungseinrichtung (43), welche einen aktiven und einen inaktiven Zustand einnehmen kann und so ausgeführt und angeordnet ist, dass
im inaktiven Zustand das Überwachungselement (33) das Fehlersignal in Abhängigkeit einer Kenngrösse des ersten Eduktstroms ein Fehlersignal erzeugen kann und
im aktiven Zustand ein funktionstüchtiges Überwachungselement (33) das Fehlersignal sicher erzeugt.

2. Einrichtung nach Anspruch 1,
**dadurch gekennzeichnet, dass**
in der ersten Zuführleitung (14) ein erstes pneumatisches Element (20) angeordnet ist,
ein erster Eingang (34) des Überwachungselements (33) mit der ersten Zuführleitung (14) unmittelbar vor dem ersten pneumatischen Element (20) und ein zweiter Eingang (35) des Überwachungselements (33) mit der ersten Zuführleitung (14) innerhalb oder unmittelbar hinter dem ersten pneumatischen Element (20) verbindbar ist und die Überbrückungseinrichtung (43) so ausgeführt und angeordnet ist, dass sie im aktiven Zustand den ersten und zweiten Eingang (34, 35) des Überwachungselements (33) verbindet und im inaktiven Zustand der erste Eingang (34) des Überwachungselements (33) mit der ersten Zuführleitung (14) unmittelbar vor dem ersten pneumatischen Element (20) und der zweite Eingang (35) des Überwachungselements (33) mit der ersten Zuführleitung (14) unmittelbar hinter dem ersten pneumatischen Element (20) verbunden ist und der erste und zweite Eingang (34, 35) des Überwachungselements (33) voneinander getrennt sind.

3. Einrichtung nach Anspruch 2,
**dadurch gekennzeichnet, dass**
die Überbrückungseinrichtung (43) ein 2/3-Wegeventil (41) aufweist, welches vom Feuerungsautomat (32) ansteuerbar ist.

4. Einrichtung nach Anspruch 3,
**dadurch gekennzeichnet, dass**
das 2/3-Wegeventil (41) so ausgeführt und angeordnet ist, dass es im aktiven Zustand der Überbrückungseinrichtung (43) den ersten und zweiten Eingang (34, 35) des Überwachungselements (33) verbindet und eine Verbindung zur ersten Zuführleitung (14) innerhalb oder unmittelbar hinter dem ersten pneumatischen Element (20) absperrt und
im inaktiven Zustand der Überbrückungseinrichtung (43) den zweiten Eingang (35) des Überwachungselements (33) mit der ersten Zuführleitung (14) innerhalb oder unmittelbar hinter dem ersten pneumatischen Element (20) verbindet und eine Verbindung zum ersten Eingang (34) des Überwachungselements (33) absperrt.

5. Einrichtung nach einem der Ansprüche 2 bis 4,
**dadurch gekennzeichnet, dass**
erste pneumatisches Element: (20) als ein Druckabfallerzeugungselement ausgeführt ist.

6. Einrichtung nach Anspruch 5,
**dadurch gekennzeichnet, dass**
das Überwachungselement (33) so ausgeführt ist, dass es eine Druckdifferenz vor und hinter dem Druckabfallerzeugungselement (20) auswertet.

7. Einrichtung nach Anspruch 6,
**dadurch gekennzeichnet, dass**
das Überwachungselement (33) als ein Druckschalter ausgeführt ist, der bei einer Druckdifferenz unterhalb eines Schwellwerts das Fehlersignal erzeugt.

8. Verfahren zur Versorgung einer Brennstoffzellenbatterie (11) bei welchem
- ein erstes gasförmiges Edukt in einem ersten Eduktstrom über eine erste Zuführleitung (14) zugeführt wird,
- ein zweites gasförmiges Edukt in einem zweiten Eduktstrom über eine zweite Zuführleitung (15) zugeführt wird,
- mittels eines Überwachungselements (33) in Abhängigkeit einer Kenngrösse des ersten Eduktstroms ein Fehlersignal erzeugt werden kann, welches einen ungenügenden ersten Eduktstrom anzeigt und von einem Feuerungsautomat (32) empfangen werden kann,
- der zweite Eduktstrom von einem in der zweiten Zuführleitung (15) angeordneten und vom Feuerungsautomat (32) ansteuerbaren Absperrelement (31) unterbrochen werden kann und
- eine Überbrückungseinrichtung (43) vom Feuerungsautomat (32) in
einen inaktiven Zustand, in dem das Überwachungselement (33)
das Fehlersignal in Abhängigkeit einer Kenngrösse des ersten Eduktstroms erzeugen kann und
in einen aktiven Zustand, in dem ein funktionstüchtiges Überwachungselement (33) das Fehlersignal sicher erzeugt, gebracht werden kann.

9. Verfahren nach Anspruch 8,
**dadurch gekennzeichnet, dass**
der Feuerungsautomat (32)
- bei inaktivem Zustand der Überbrückungseinrichtung (43) und Vorliegen des Fehlersignals das Absperrelement (31) schliesst und
- bei aktivem Zustand der Überbrückungseinrichtung (43) und Vorliegen des Fehlersignals das Absperrelement (31) geöffnet hält.

10. Verfahren nach Anspruch 8 oder 9,
**dadurch gekennzeichnet, dass**
der Feuerungsautomat (32)
- bei aktivem Zustand der Überbrückungseinrichtung (43) und Vorliegen des Fehlersignals eine Funktionstüchtigkeit des Überwachungselements (33) und
- bei aktivem Zustand der Überbrückungseinrichtung (43) und keinem Vorliegen des Fehlersignals ein Fehlverhalten des Überwachungselements (33)
erkennt.

11. Verfahren nach Anspruch 8, 9 oder 10,
**dadurch gekennzeichnet, dass**
der Feuerungsautomat (32) die Überbrückungseinrichtung (43) ausgehend vom inaktiven Zustand in zeitlichen Abständen in den aktiven Zustand und anschiessend wieder zurück in den inaktiven Zustand bringt.

12. Verfahren nach Anspruch 11,
**dadurch gekennzeichnet, dass**
der Feuerungsautomat (32) die Überbrückungseinrichtung (43) ausgehend vom aktiven Zustand direkt nach Empfang eines Fehlersignals vom Überwachungselement (33) zurück in den inaktiven Zustand bringt.

## Claims

1. A device for supplying a fuel cell battery (11) comprising
- a first feed line (14) for supplying a first gaseous reactant in a first reactant flow;
- a second supply line (15) for supplying a second gaseous reactant in a second reactant flow;
- a monitoring element (33) which is designed such that it can generate an error signal in dependence on a parameter of the first reactant flow, said error signal indicating an insufficient first reactant flow;
- an automatic firing device (32) which can receive the monitoring signal;
- a shut-off element (31) which is arranged in the second supply line (15), which is controllable by the automatic firing device (32) and which is provided to interrupt the second reactant flow; and
- a bridging device (43) which can adopt an active state and an inactive state and which is designed and arranged such that
the monitoring element (33) can generate the error signal in dependence on a parameter of the first reactant flow in the inactive state, and
a functional monitoring element (33) reliably generates the error signal in the active state.

2. A device in accordance with claim 1,
**characterized in that**
a first pneumatic element (20) is arranged in the first supply line (14); and
a first inlet (34) of the monitoring element (33) is connectable to the first supply line (14) directly before the first pneumatic element (20) and a second inlet (35) of the monitoring element (33) is connectable to the first supply line (14) within or directly behind the first pneumatic element (20), and the bridging device (43) is designed and arranged such that it connects the first and second inlets (34, 35) of the monitoring element (33) in the active state and the first inlet (34) of the monitoring element (33) is connected to the first supply line (14) directly before the first pneumatic element (20) and the second inlet (35) of the monitoring element (33) is connected to the first supply line (14) directly behind the first pneumatic element (20) in the inactive state and such that the first and second inlets (34, 35) of the monitoring element (33) are separate from one another.

3. A device in accordance with claim 2,
**characterized in that**
the bridging device (43) has a 2/3 way valve (41) which is controllable by the automatic firing device (32).

4. A device in accordance with claim 3,
**characterized in that**
the 2/3 way valve (41) is designed and arranged such that it
connects the first and second inlets (34, 35) of the monitoring element (33) in the active state of the bridging device (43) and shuts off a connection to the first supply line (14) within or directly behind the first pneumatic element (20); and
connects the second inlet (35) of the monitoring element (33) to the first supply line (14) within or directly behind the first pneumatic element (20) in the inactive state of the bridging device (43) and shuts off a connection to the first inlet (34) of the monitoring element (33).

5. A device in accordance with any one of the claims 2 to 4,
**characterized in that**
a first pneumatic element (20) is designed as a pressure drop generation element.

6. A device in accordance with claim 5,
**characterized in that**
the monitoring element (33) is designed such that it evaluates a pressure difference before and after the pressure generation element (20).

7. A device in accordance with claim 6,
**characterized in that**
the monitoring element (33) is designed as a pressure switch which generates the error signal on a pressure difference below a threshold value.

8. A method for supplying a fuel cell battery (11), in which
- a first gaseous reactant is supplied in a first reactant flow via a first supply line (14);
- a second gaseous reactant is supplied in a second reactant flow via a second supply line (15);
- an error signal can be generated by means of a monitoring element (33) in dependence on a parameter of the first reactant flow, said error signal indicating an insufficient first reactant flow and being able to be received by an automatic firing device (32);
- the second reactant flow can be interrupted by a shut-off element (31) arranged in the second supply line (15) and controllable by the automatic firing device (32); and
- a bridging device (43) can be brought by the automatic firing device (32) into
an inactive state in which the monitoring element (33) can generate the error signal in dependence on a parameter of the first reactant flow; and
into an active state in which a functional monitoring element (33) reliably generates the error signal.

9. A method in accordance with claim 8,
**characterized in that**
the automatic firing device (32)
- closes the shut-off element (31) in the inactive state of the bridging device (43) on a presence of the error signal; and
- keeps the shut-off element (31) open in the active state of the bridging device (43) on a presence of the error signal.

10. A method in accordance with claim 8 or claim 9,
**characterized in that**
the automatic firing device (32) recognizes
- an operational reliability of the monitoring element (33) in the active state of the bridging device (43) and on a presence of the error signal; and
- a malfunction of the monitoring element (33) in the active state of the bridging device (43) and in the absence of the error signal.

11. A method in accordance with claim 8, claim 9 or claim 10,
**characterized in that**
the automatic firing device (32) brings the bridging device (43), starting from the inactive state, into the active state and subsequently back into the inactive state again at time intervals.

12. A method in accordance with claim 11,
**characterized in that**
the automatic firing device (32) brings the bridging device (43), starting from the active state, back into the inactive state directly after receiving an error signal from the monitoring element (33).

## Revendications

1. Dispositif d'alimentation d'une batterie de piles à combustible (11) avec
- une première conduite d'alimentation (14) pour alimenter un premier éduit gazeux dans un premier flux d'éduit
- une deuxième conduite d'alimentation (15) pour alimenter un deuxième éduit gazeux dans un deuxième flux d'éduit
- un élément de contrôle (33), qui est réalisé de telle sorte, qu'il, dépendant d'un paramètre du premier flux d'éduit, peut générer un signal d'erreur pour indiquer un premier flux d'éduit insuffisant
- un allumage automatique (32), lequel peut recevoir le signal de surveillance
- un élément de fermeture (31), disposé dans la deuxième conduite d'alimentation (15), lequel peut être commandé par l'allumage automatique (32) et lequel est destiné à interrompre le deuxième flux d'éduit et
- un moyen de pontage (43), lequel peut pendre un état actif et un état inactif et lequel est réalisé et disposé de telle sorte, que, dans l'état inactif, l'élément de contrôle (33) peut générer un signal d'erreur dépendant d'un paramètre du premier flux d'éduit et dans l'état actif, un élément de contrôle fonctionnel (33) génère certainement le signal d'erreur.

2. Dispositif selon la revendication 1,
**caractérisé en ce que**
dans la première conduite d'alimentation (14) est disposé un premier élément pneumatique (20),
une première entrée (34) d'élément de contrôle (33) peut être connecté avec la première conduite d'alimentation (14) directement avant le premier élément pneumatique (20) et une deuxième entrée (35) d'élément de contrôle (33) peut être connectée avec la première conduite d'alimentation (14) à l'intérieur ou directement derrière le premier élément pneumatique (20) et le moyen de pontage (43) est réalisé et disposé de telle sorte, qu'il connecte dans l'état actif la première entrée avec la deuxième entrée (34,35) d'élément de contrôle (33) et dans l'état inactif la première entrée (34) d'élément de contrôle (33) est connecté avec la première
conduite d'alimentation (14) directement avant le premier élément pneumatique (20) et la deuxième entrée (35) d'élément de contrôle (33) est connecté avec la première conduite d'alimentation (14) directement derrière le premier élément pneumatique (20) et la première entrée et la deuxième entrée (34,35) d'élément de contrôle (33) sont séparées.

3. Dispositif selon la revendication 2,
**caractérisé en ce que**
le moyen de pontage (43) présente un 2/3 distributeur (41), lequel peut être commandé par l'allumage automatique (32).

4. Dispositif selon la revendication 3,
**caractérisé en ce que**
le 2/3 distributeur (41) est réalisé et disposé de telle sorte, qu'il connecte la première entrée avec la deuxième entrée (34,35) d'élément de contrôle (33) dans l'état actif du moyen de pontage (43) et qu'il ferme une connexion à la première conduit d'alimentation (14) à l'intérieur ou directement derrière le premier élément pneumatique (20)
et
qu'il connecte la deuxième entrée (35) d'élément de contrôle (33) avec la première conduit d'alimentation (14) à l'intérieur ou directement derrière le premier élément pneumatique (20) dans l'état inactif du moyen de pontage (43) et qu'il ferme une connexion à la première entrée (34) d'élément de contrôle (33).

5. Dispositif selon l'une des revendications 2 à 4,
**caractérisé en ce que**
le premier élément pneumatique (20) est réalisé comme un élément pour générer une chute de pression.

6. Dispositif selon la revendication 5,
**caractérisé en ce que**
l'élément de contrôle (33) est réalisé de telle sorte, qu'il analyse une différence de pression avant et derrière l'élément pour générer une chute de pression (20).

7. Dispositif selon la revendication 6,
**caractérisé en ce que**
l'élément de contrôle (33) est réalisé comme un interrupteur de pression, lequel génère un signal d'erreur en cas d'une différence de pression dessous d'une valeur de seuil.

8. Procédé d'alimentation d'une batterie de piles à combustible (11) par lequel
- un premier éduit gazeux dans un premier flux d'éduit est alimenté par une première conduite d'alimentation (14)
- un deuxième éduit gazeux dans un deuxième flux d'éduit est alimenté par une deuxième conduite d'alimentation (15)
- un signal d'erreur peut être généré par un élément de contrôle (33) dépendant d'un paramètre du premier flux d'éduit, lequel indique un premier flux d'éduit insuffisant et lequel peut être reçu par un allumage automatique (32),
- le deuxième flux d'éduit peut être interrompu par un élément de fermeture (31), lequel est disposé dans la deuxième conduite d'alimentation (15) et lequel est commandé par l'allumage automatique (32)
et
- un moyen de pontage (43) peut être mis dans un état inactif par l'allumage automatique (32), dans lequel l'élément de contrôle (33) peut générer le signal d'erreur dépendant d'un paramètre du premier flux d'éduit et
dans un état actif, dans lequel un élément de contrôle fonctionnel (33) génère certainement le signal d'erreur.

9. Procédé selon la revendication 8,
**caractérisé en ce que**
l'allumage automatique (32)
- ferme l'élément de fermeture (31) dans l'état inactif du moyen de pontage (43) et en présence du signal d'erreur et
- maintient l'élément de fermeture (31) ouvert dans l'état actif du moyen de pontage (43) et en présence du signal d'erreur.

10. Procédé selon la revendication 8 ou 9,
**caractérisé en ce que**
l'allumage automatique (32)
détecte
- un fonctionnement d'élément de contrôle (33) dans l'état actif du moyen de pontage (43) et en présence du signal d'erreur et
- une défaillance d'élément de contrôle (33) dans l'état actif du du moyen de pontage (43) et en absence du signal d'erreur.

11. Procédé selon la revendication 8,9 ou 10,
**caractérisé en ce que**
l'allumage automatique (32) met le moyen de pontage (43) dans l'état actif et ensuite à nouveau dans l'état inactif à des intervalles de temps, à partir de l'état inactif.

12. Procédé selon la revendication 11,
**caractérisé en ce que**
l'allumage automatique (32) remet le moyen de pontage (43) dans l'état inactif directement après la réception d'un signal d'erreur par l'élément de contrôle (33),à partir de l'état actif.
